Europäisches Patentamt

European Patent Office

Office européen des brevets

(19)

(11) Numéro de publication : **0 090 411**

**B1**

(12)

# FASCICULE DE BREVET EUROPÉEN

(45) Date de publication du fascicule du brevet :
01.10.86

(21) Numéro de dépôt : 83103116.6

(22) Date de dépôt : 29.03.83

(51) Int. Cl.⁴ : **F 04 D 13/10**

(54) Groupe moto-pompe immergé.

(30) Priorité : 31.03.82 FR 8205500

(43) Date de publication de la demande :
05.10.83 Bulletin 83/40

(45) Mention de la délivrance du brevet :
01.10.86 Bulletin 86/40

(84) Etats contractants désignés :
AT DE FR GB IT SE

(56) Documents cités :
US-A- 2 682 229
US-A- 2 740 058
US-A- 2 740 059
US-A- 3 369 137

(73) Titulaire : ALSTHOM
38, avenue Kléber
F-75784 Paris Cédex 16 (FR)

(72) Inventeur : Gilmer, André
42 rue Alix
F-93600 Aulnay-sous-Bois (FR)
Inventeur : Romand-Monnier, Jacques
11, rue Louis Rousseau
F-39000 Lons le Saunier (FR)
Inventeur : Lejeune, Jean-Pierre
26 rue des Frères Berger
F-90500 Beaucourt (FR)

(74) Mandataire : Weinmiller, Jürgen et al
Zeppelinstrasse 63
D-8000 München 80 (DE)

EP 0 090 411 B1

Jouve, 18, rue St-Denis, 75001 Paris, France

## Description

La présente invention concerne un groupe moto-pompe immergé dans un puits dans lequel la partie motrice est remplie d'un fluide la protégeant du milieu extérieur et comportant un système d'étanchéité dynamique entre la partie pompe, entraînée par ladite partie motrice et en contact avec le milieu extérieur, et la partie motrice remplie dudit fluide, un réservoir de compensation expansible, communiquant avec la partie motrice, étant situé sous ladite partie motrice, à son extrémité opposée par rapport à ladite étanchéité dynamique, au-delà de l'extrémité de l'arbre moteur, ledit réservoir d'expansion étant soumis à la pression du milieu extérieur et à l'effort d'un dispositif de compression à ressort prenant appui, d'une part contre une partie fixe, liée à la carcasse de la partie motrice et l'obturant à sa partie inférieure et d'autre part contre ledit réservoir expansible, assurant une surpression du fluide intérieur à la partie motrice par rapport au milieu extérieur.

Un tel groupe moto-pompe est par exemple décrit dans le document US-A-3 369 137. Le réservoir expansible en surpression permet d'éviter la pollution du milieu interne à la partie motrice. Cependant, pour des puits très profonds et à haute température, pour lesquels le groupe moto-pompe est généralement constitué par un assemblage de plusieurs moteurs très longs, par exemple trois moteurs de huit à neuf mètres de longueur chacun, de faible diamètre, surmontés de plusieurs pompes accouplées, on obtient au cours de la descente, et à cause de la dilatation du réservoir, due à l'élévation de température, des surpressions inadmissibles qui rendent inutilisables ce genre de réservoirs expansibles.

La présente invention a pour but de pallier cet inconvénient et de permettre d'utiliser valablement un réservoir expansible en surpression dans des puits très profonds et à haute température.

L'invention a ainsi pour objet un groupe moto-pompe tel que spécifié ci-dessus, qui est caractérisé en ce que ledit dispositif de compression à ressort comporte un premier ressort et un second ressort dont les efforts s'ajoutent, s'appuyant tous les deux sur ledit réservoir expansible, ledit second ressort comprenant un dispositif de décrochage comportant un tube, monté sur une tige d'appui contre le réservoir, ledit second ressort s'appuyant contre un manchon en butée contre ledit tube et celui-ci étant solidarisé de la tige par l'intermédiaire d'une rangée de billes maintenues dans une gorge de la tige et dans des logements du tube par une douille, la compression dudit second ressort jusqu'à une butée d'appui de ladite douille permettant, par coulissement de la douille sur le tube, la libération des billes de ladite gorge et le coulissement du tube sur la tige débandant ainsi ledit second ressort lorsque sa flèche atteint une valeur prédéterminée.

De préférence, l'appui des deux ressorts contre ledit réservoir expansible est réalisé par l'intermédiaire d'une pièce prenant appui sur le réservoir par l'interposition d'une butée à billes rendant ladite pièce libre en rotation.

L'invention sera bien comprise à la lumière de la description d'un exemple de réalisation de l'invention faite ci-après en regard du dessin annexé dans lequel :

La figure 1 montre un groupe moto-pompe selon l'invention.

La figure 2 montre une vue agrandie, partiellement écorchée, d'une partie de la figure 1 consistant en un module d'étanchéité.

La figure 3 montre une vue agrandie, partiellement écorchée, d'une autre partie de la figure 1 consistant en un module comportant un réservoir d'expansion et des moyens pour assurer une surpression du fluide dans les moteurs.

La figure 4 montre le module de la figure 2 en vue plus agrandie et détaillée.

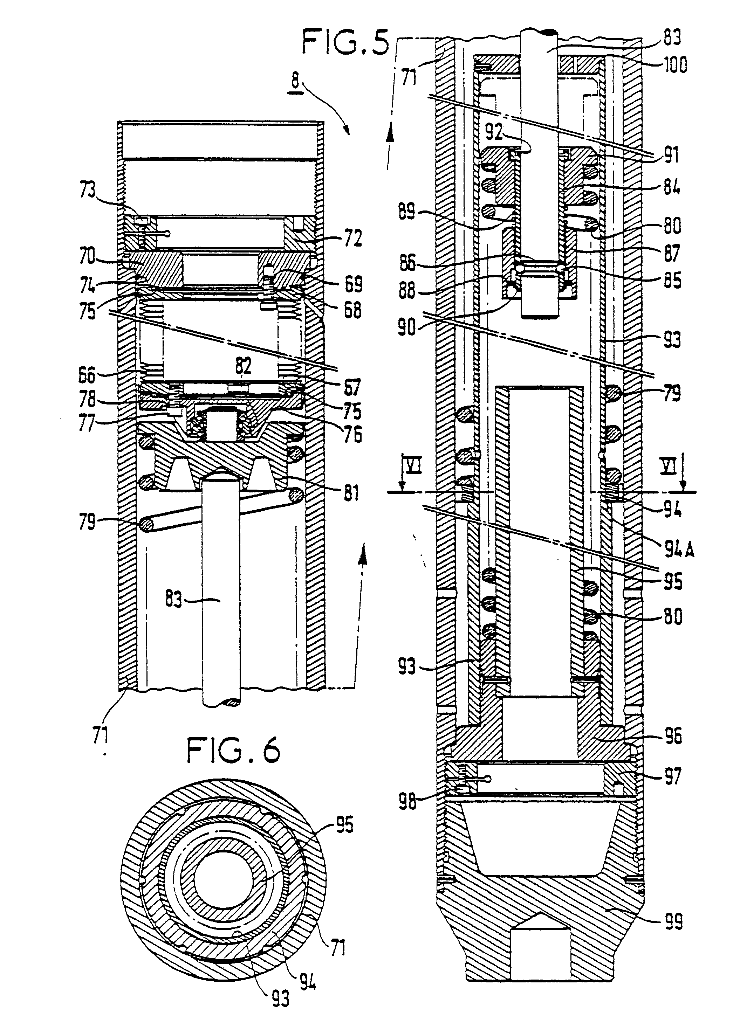

La figure 5 montre le module de la figure 3 en vue plus agrandie et détaillée.

La figure 6 est une coupe selon VI-VI de la figure 5.

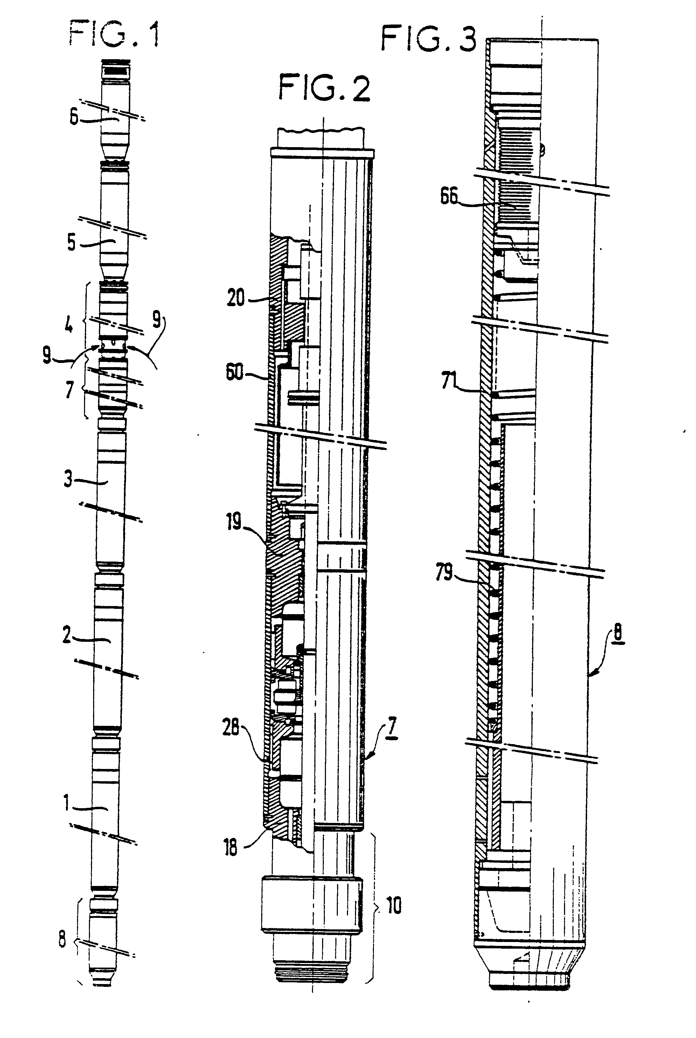

La figure 1 montre un ensemble moto-pompe constitué par un certain nombre de modules assemblés. Tel que représenté, cet ensemble comporte trois moteurs 1, 2 et 3, un séparateur de gaz 4, deux éléments de pompe 5 et 6, un module d'étanchéité supérieur 7 associé à un module inférieur 8 comportant un réservoir de compensation expansible et des moyens permettant d'assurer une surpression du fluide intérieur aux moteurs : de l'huile, par rapport au milieu extérieur : du pétrole brut, dans le cas de l'application de l'ensemble moto-pompe au pompage de pétrole dans un puits pompé.

La partie pompe composée des éléments 5 et 6 est entraînée en rotation par l'arbre moteur de la partie motrice composée des moteurs 1, 2 et 3 et l'aspiration des pompes a lieu au niveau du séparateur de gaz 4 et est représentée par les flèches 9 sur la figure 1.

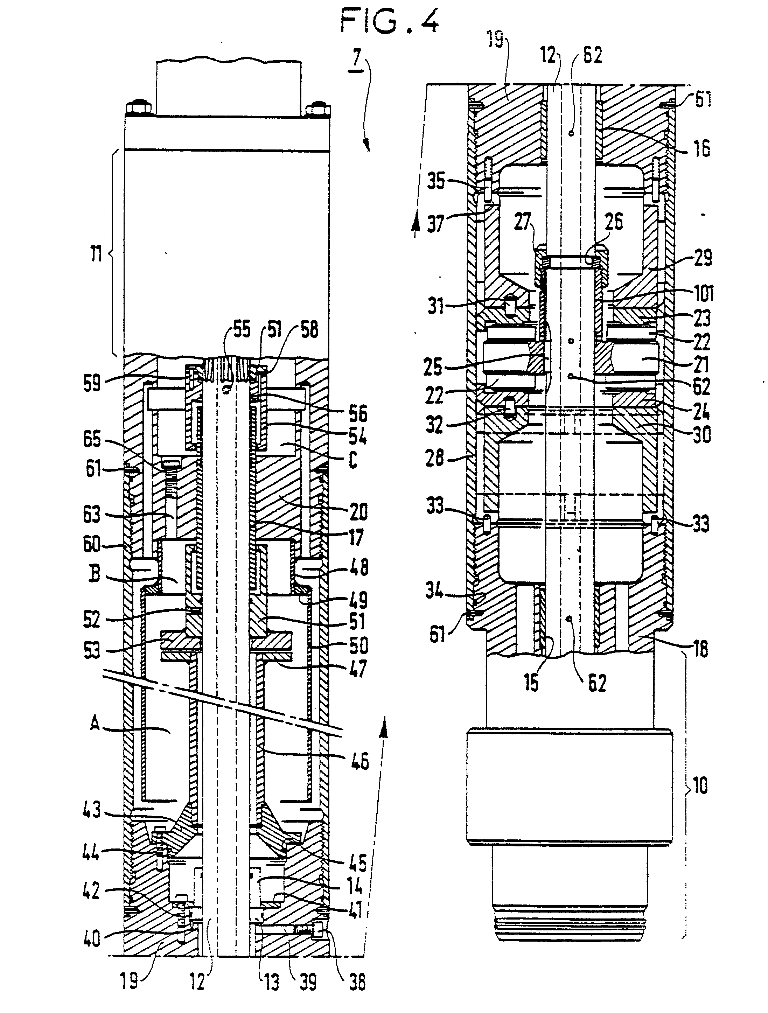

En se reportant maintenant à la figure 4 on va décrire le module supérieur d'étanchéité 7. Ce module est accouplé, à sa partie inférieure, à l'extrémité supérieure du moteur 3 au moyen d'un accouplement 10 non détaillé, et à sa partie supérieure, à l'extrémité inférieure du séparateur de gaz 4 par des moyens d'accouplement non détaillés 11.

Le module supérieur d'étanchéité 7 est traversé par un arbre 12 provenant des moteurs et allant vers les pompes pour leur entraînement.

Ce module réalise la séparation entre le fluide interne aux moteurs : de l'huile, et le milieu extérieur en communication avec les pompes : du pétrole, au niveau de la garniture mécanique d'étanchéité dynamique qui comporte un grain fixe 13 et un grain mobile en rotation 14. Il s'agit par exemple d'une garniture mécanique compensée à soufflet métallique soudé permettant une libre dilatation de l'arbre 12.

L'arbre 12 est guidé en rotation par trois coussinets 15, 16 et 17 respectivement montés dans des paliers 18, 19 et 20 et est arrêté en translation par un dispositif de butée composé de deux butées à patins oscillants montés en opposition de part et d'autre d'un collet de butée 21. Chaque butée comprend par exemple six patins oscillants tels que 22, montés sur leur support en forme de couronne, respectivement 23 et 24. Le collet de butée 21 est lié à l'arbre 12, en rotation par une clavette 25 et en translation par deux demi-coquilles 26 servant de butée latérale, placées dans une gorge de l'arbre 12 et maintenues par un écrou 27 vissé sur un prolongement en forme de manchon 101 du collet de butée 21. Les deux butées sont positionnées dans un tube extérieur 28 par une entretoise supérieure 29 et une entretoise inférieure 30. Les entretoises 29 et 30 sont liées angulairement aux supports de patins 23 et 24 par des pions 31 et 32. L'entretoise inférieure 30 est en appui sur le palier 18 et est immobilisée en rotation par rapport à ce palier au moyen de pions 33. Le palier inférieur 18 est vissé dans le tube extérieur 28 et l'étanchéité est assuré par un joint torique 34.

Le palier 19 est vissé à l'extrémité supérieure du tube extérieur 28. Ce palier porte deux pions 35 poussés par des ressorts 36 qui, au moment du montage du palier 19, par vissage sur le tube extérieur 28, poussent les pions 35 dans les évidements de passage d'huile 37 de l'entretoise supérieure 29. Une fois que les pions sont rentrés dans ces évidements, le vissage du palier 19 entraîne dans sa rotation, l'entretoise supérieure 29 ainsi que le support 23 et les patins 22 de la butée supérieure.

Le palier 19 porte une vis 38 obturant un trou de purge 39.

Le grain fixe 13 de la garniture mécanique d'étanchéité est monté dans un logement du palier 19, il est arrêté en rotation par un pion 40 et en translation par une rondelle 41 fixée sur le palier par trois vis 42.

Ce module comporte en outre un dispositif de protection de la garniture mécanique d'étanchéité contre les particules solides qui peuvent s'introduire dans la partie supérieure du module en communication avec le milieu extérieur. Ce dispositif comporte d'abord trois pièces fixes soudées les unes aux autres et comprenant une bride de fixation 43 au palier 19 par des vis 44, l'étanchéité étant assuré par un joint torique 45, un tube 46 et un plateau 47. Un deuxième ensemble fixe, solidaire du palier 20, en forme de cloche vient coiffer le plateau 47 et le tube 46, il est composé des pièces 48, 49 et d'un tube 50. L'ensemble est complété par deux déflecteurs rotatifs : un déflecteur inférieur 51, arrêté sur l'arbre par une vis 52 et portant un disque 53, agissant sur les particules solides par effet centrifuge et un déflecteur supérieur 54, arrêté sur l'arbre par une vis 55, l'étanchéité étant assuré par un joint torique 56. Un bouchon 57 est fixé sur le déflecteur supérieur 54 avec l'interposition d'un joint plat 58 par des vis 59. Un trou de purge 63 est percé dans le palier 20 jusque dans la chambre B formée par la pièce 48. Ce trou est bouché par un bouchon de purge 65.

Le palier supérieur 20 est vissé sur un tube extérieur 60 lui-même vissé sur le palier intermédiaire 19. Les paliers 18, 19 et 20 sont arrêtés en rotation par rapport aux tubes extérieurs 28 et 60 par des goupilles 61.

L'arbre 12 est creux et possède au-dessous du grain fixe 13 de la garniture mécanique d'étanchéité des trous de communications 62 pour tous les passages d'huile. Pour ne pas alourdir la figure, les pointillés n'ont pas été représentés sauf sous la butée montrant les passages d'huile dans l'entretoise inférieure 30.

On va maintenant décrire le module inférieur 8 dont le but est d'assurer une réserve d'huile et de créer une surpression de l'huile dans les moteurs par rapport au milieu extérieur, assurant ainsi un excellent fonctionnement du module d'étanchéité supérieur 7 et en particulier de la garniture mécanique d'étanchéité 13, 14 et permettant une longue durée de vie du groupe moto-pompe.

Les variations volumiques de l'huile dans les moteurs sont compensées par la dilatation ou la contraction d'un réservoir expansible 66. Ce réservoir est constitué par l'assemblage d'un ou plusieurs soufflets métalliques soudés. Chaque soufflet comporte une bride d'assemblage mâle 67 et une bride d'assemblage femelle 68. La bride femelle 68 du soufflet supérieur est fixé par des vis 69 à une pièce support 70 centré dans un tube carcasse extérieur 71, et bloqué par un écrou 72 vissé dans le tube. L'écrou 72 est fendu et comporte une vis de freinage 73. Un joint torique 74 assure l'étanchéité entre le tube 71 et la pièce support 70. De même, un joint torique 75 assure l'étanchéité entre deux soufflets successifs et à l'extrémité supérieure comme on le voit sur la figure, entre le dernier soufflet et la pièce support 70.

La bride mâle 67 du soufflet inférieur est fixée à un fond de réservoir 76 par des vis 77. L'étanchéité entre la bride 67 et le fond 76 est réalisée par un joint torique 75. Un joint plat 78 est placé sous les têtes de vis 77.

Le fond de réservoir 76 réalise la séparation entre le réservoir 66 et le milieu extérieur : du pétrole brut, lorsque l'ensemble est descendu au fond du puits.

Une surpression du milieu interne est assurée grâce à la poussée d'un premier ressort 79, extérieur, et d'un second ressort 80, intérieur, appliquée sur une pièce d'appui intermédiaire 81 et transmise au fond du réservoir 76 par l'intermédiaire d'une butée double à billes 82.

La pièce d'appui intermédiaire 81, avec la butée 82 permettent de ne pas contraindre en torsion le réservoir 66 lors de la compression des ressorts.

La poussée du ressort intérieur 80 est transmise à la pièce d'appui intermédiaire 81 par un dispositif de décrochage permettant de débander le ressort 80 lorsque son effort de compression atteint une limite prédéterminée. Ce dispositif compend une tige 83 transmettant la poussée du ressort 80 à la pièce d'appui intermédiaire 81. Sur cette tige 83 est montée un tube coulissant 84 qui est solidarisée de la tige 83, en translation, par des billes 85 situées dans des logements du tube et maintenues dans une gorge 86 de la tige 83 par une douille 87 mise en butée contre une rondelle 88 grâce à un ressort 89. La rondelle 88 est arrêtée sur la tige 83 par un circlip 90. La charge du ressort intérieur 80 est transmise au tube coulissant 84 par un manchon 91 en butée contre le tube 84. Un joint racleur 92 est monté à l'extrémité supérieure du tube 84.

Le ressort extérieur 79 est guidé entre le tube carcasse 71 et un tube 93 et s'appuie sur une rondelle 94 centrée sur le tube 93 et arrêtée contre un épaulement 94A du tube 93. Le ressort intérieur 80 est guidé entre le tube 93 et un tube 95 et s'appuie sur un bloc support 96 qui positionne les tubes 93 et 95. Ce bloc support 96 est centré dans le tube carcasse 71 et il est bloqué par un écrou 97 fendu et freiné par une vis 98. L'ensemble du module est fermé par un bloc d'extrémité 99.

Le tube 93 porte à son extrémité haute un flasque 100 servant de guide pour la tige 83.

L'extrémité supérieure du tube 95 sert de butée pour la douille 87 lorsque le réservoir 66 s'allonge, comprimant les ressorts 79 et 80. C'est ainsi que s'opère, comme on va l'expliquer lors du fonctionnement, le décrochage du ressort intérieur 80, par coulissement de la douille 87 sur le tube 84, permettant la libération des billes 85 désolidarisant ainsi le tube 84 de la tige 83.

Ce module 8 est situé à l'extrémité inférieure du groupe moto-pompe au-delà de l'extrémité de l'arbre moteur et est vissé au module voisin situé au-dessus, par exemple au moteur 1.

Le remplissage et la descente dans le puits se font de la manière suivante : les moteurs 1, 2 et 3 et les modules 7 et 8 sont assemblés, la purge 39 du module d'étanchéité 7 est ouverte. L'ensemble des modules est à la pression atmosphérique. Le réservoir expansible 66 est entièrement comprimé sous l'action combinée des ressorts 79 et 80. On remplit les moteurs et le module 8 d'huile qui coule jusqu'au fond 76 du réservoir expansible 66. L'huile est introduite par le module d'étanchéité 7 à la partie supérieure de son arbre creux 12 dans le trou de l'arbre. L'huile monte jusqu'au niveau de la garniture d'étanchéité 13, 14 remplissant les moteurs et toutes les cavités et canaux du module 7 jusqu'à la purge 39. La pression P1 dans le réservoir expansible 66 dépend de la densité d de l'huile et de la hauteur de la colonne d'huile depuis le fond 76 du réservoir 66 jusqu'à la garniture d'étanchéité 13-14. Au niveau de la garniture d'étanchéité, la pression P2 est la pression atmosphérique.

La pression P1 sur le fond 76 du réservoir 66 comprime les ressorts 79 et 80 et le réservoir s'étend jusqu'à ce que l'équilibre soit réalisé entre la charge des ressorts et l'effort exercé sur le fond 76 par la pression P1.

On ferme alors la purge 39 avec son bouchon 38. On remplit également les cavités repérées A, B, C, par le trou 63, le bouchon 65 étant ôté, on laisse dégazer et on referme. On assemble alors les pompes.

On descend ensuite cet ensemble dans le puits, l'air qui enveloppait le réservoir expansible 66 est alors remplacé par le fluide extérieur rencontré, la pression extérieure est donc croissante et transmise au milieu interne par le réservoir expansible 66 ainsi que la température qui croît au fur et à mesure de la descente dilatant l'huile contenu dans les moteurs et provoquant l'allongement du réservoir expansible 66.

La pression interne au réservoir 66 est égale à la pression extérieure, due à la colonne de fluide au-dessus du fond 76 du réservoir, plus à la pression due à la poussée des ressorts. La surpression interne par rapport au milieu externe est donc égale à la pression due à la poussée des ressorts. Cette poussée est proportionnelle à l'écrasement des ressorts.

Le système de décrochage décrit plus haut permet de limiter à une valeur prédéterminée la surpression. Ce décrochage fonctionne de la façon suivante. Le réservoir 66 se dilatant sous l'effet de l'accroissement de la température, il arrive un moment où la douille 87 vient prendre appui contre l'extrémité haute du tube 95, cette douille coulisse alors sur le tube 84 en comprimant le ressort 89 ce qui permet aux billes 85 de sortir de la gorge 86 désolidarisant le tube 84 de la tige 83 et permettant au ressort intérieur 80 de se débander par coulissement du tube coulissant 84 sur la tige 83. La surpression est alors donnée uniquement par le ressort extérieur 79 calculée pour que la surpression limite admissible ne soit jamais atteinte.

Le dispositif décrit permet ainsi d'absorber toute variation volumique du milieu interne sans risque de pénétration du milieu externe, autorisant un nombre de cycles, arrêts-démarrages, très importants. La surpression assure en outre un excellent fonctionnement de la garniture mécanique 13, 14 du module d'étanchéité 7. Le deuxième ressort interne 80 permet, alors que la pression extérieure est encore l'atmosphère de soutenir la colonne d'huile intérieure, tout en maintenant le réservoir expansible 66 dans une expansion limitée puis de permettre sa dilatation par la suite au cours de la descente ; lors du décrochage, le poids de la colonne d'huile est compensée par la pression extérieure due à la hauteur de fluide au-dessus du fond de réservoir 76 et qui est à peu près égale du côté interne et externe de ce fond à la différence près, due à la différence de densité de l'huile interne par rapport à la densité du fluide interne. La raideur du ressort extérieur 79 est beaucoup plus faible que celle du ressort intérieur 80 et permet, au cours du fonctionnement, d'assurer la surpression désirée dans une limite inférieure à la limite admissible pour les soufflets.

A titre non limitatif, on donne ci-après un exemple chiffré :

ressort intérieur 80 : charge maximale 320 kg pour une flèche de 550 mm

ressort extérieur 79 : charge maximale 300 kg pour une flèche de 1 130 mm

surface du fond 76 de soufflet : 102 cm$^2$

densité de l'huile d : 0,873 à 20 °C

coefficient de dilatation de l'huile : pour un $\Delta$T de 130° : 9,5 %.

Au départ, avant de remplir les moteurs d'huile, le réservoir est complètement comprimé par les ressorts qui ont une précontrainte de 151 mm pour le ressort extérieur et 110 mm pour le ressort intérieur.

On verse alors 71 litres d'huile ce qui provoque une expansion du réservoir 66 de 1 dm$^3$. La colonne d'huile est alors de 28 m, ce qui donne une pression sur le fond de 2,44 bars soit 245 kg.

Au cours de la descente, la température croît, le réservoir se dilate et la pression augmente. Par le système de décrochage, on limite cette pression à 4,5 bars soit 450 kg ; le ressort extérieur supportant alors ces 450 kg moins les 320 kg de charge maximale du ressort intérieur soit 130 kg. Une fois le décrochage, la pression est donc de 1,3 bars, et le réservoir contient 3,5 dm$^3$ d'huile, il s'est allongé de 340 mm. On continu la descente jusqu'au fond.

On met en route les moteurs et pour un fonctionnement à 150° les 71 litres d'huile se dilatent jusqu'à 78 litres et il y a donc 8 litres d'huile dans le soufflet qui peut se dilater jusqu'à 10 litres. Avec 8 litres, et une fuite de 0,5 cm$^3$/h à la garniture d'étanchéité du module 7, on a une réserve d'huile de 1 600 heures.

**Revendications**

1. Groupe moto-pompe immergé dans un puits dans lequel la partie motrice (1, 2, 3) est remplie d'un fluide la protégeant du milieu extérieur et comportant un système d'étanchéité dynamique (13, 14) entre la partie pompe (4, 5, 6), entraînée par ladite partie motrice et en contact avec le milieu extérieur, et la partie motrice, remplie dudit fluide, un réservoir de compensation expansible, (6) communiquant avec la partie motrice, étant situé sous ladite partie motrice, à son extrémité opposée par rapport à ladite étanchéité dynamique, au-delà de l'extrémité de l'arbre moteur, ledit réservoir d'expansion étant soumis à la pression du milieu extérieur et à l'effort d'un dispositif de compression à ressort (79, 80) prenant appui, d'une part contre une partie fixe (99), liée à la carcasse de la partie motrice et l'obturant à sa partie inférieure et d'autre part contre ledit réservoir expansible, assurant une surpression du fluide intérieur à la partie motrice par rapport au milieu extérieur, caractérisé en ce que ledit dispositif de compression à ressort comporte un premier ressort (79) et un second ressort (80) dont les efforts s'ajoutent, s'appuyant tous les deux sur ledit réservoir expansible, ledit second ressort comprenant un dispositif de décrochage comportant un tube (84) monté sur une tige (83) d'appui contre le réservoir, ledit second ressort (80) s'appuyant contre un manchon (91) en butée contre ledit tube et celui-ci étant solidarisé de la tige par l'intermédiaire d'une rangée de billes (85) maintenues dans une gorge (86) de la tige et dans des logements du tube par une douille (87), la compression dudit second ressort jusqu'à une butée d'appui (95) de ladite douille permettant, par coulissement de la douille sur le tube, la libération des billes de ladite gorge et le coulissement du tube (84) sur la tige (83), débandant ainsi ledit second ressort (80) lorsque sa flèche atteint une valeur prédéterminée.

2. Groupe moto-pompe immergé selon la revendication 1, caractérisé en ce que l'appui des deux dits ressorts contre ledit réservoir expansible est réalisé par l'intermédiaire d'une pièce (81) prenant appui sur le réservoir par l'interposition d'une butée à billes (82) rendant ladite pièce libre en rotation.

**Claims**

1. A motor-pump assembly submerged in a well, the motor portion (1, 2, 3) of which is filled with a fluid to protect the motor portion against the outside medium, the assembly comprising a dynamic sealing system (13, 14) between the pump portion (4, 5, 6), which is driven by the motor portion and which is in contact with the outside medium, and the motor portion, which is filled with said fluid, an expansible compensation tank (6) communicating with the motor portion and being located under said motor portion at the opposite end with respect to the dynamic seal and beyond the end of the motor shaft, said expansion tank being submitted to the pressure of the outside medium and to the thrust of a compressed spring device (79, 80) which bears on the one hand against a stationary part (99) connected to the frame of the motor portion and obturating the latter at its lower part, and on the other hand against the expansible tank, thus ensuring that the inner fluid of the motor portion is at a higher pressure than the outside medium, characterized in that said compressed spring device comprises a first spring (79) and a second spring (80) which add their thrusts and which bear both on said expansible tank, the second spring comprising a release device including a tube (84) mounted on a rod (83) which bears against the tank, said second spring (80) bearing against a bush (91) which is applied against said tube, said tube being coupled to the rod via a series of balls (85) maintained by a sleeve (87) in a groove (86) of the rod and in cavities of the tube, the compression of said second spring up to a stop (95) of said sleeve causing the sleeve to slide on said tube, the balls to be released from said groove and the tube (84) to slide on the rod (83), thus relaxing the second spring (80) as soon as its compression has reached a predetermined value.

2. A submerged motor-pump assembly according to claim 1, characterized in that the two springs bear against the expansible tank through an element (81) which bears on the tank via a ball- type stop (82) by which said element is disengaged in rotation.

**Patentansprüche**

1. In ein Bohrloch eingetauches Motor-Pumpenaggregat, in dem der Motorteil (1, 2, 3) mit einem Fluid gefüllt ist, das ihn gegen das äußere Milieu schützt, und das ein dynamisches Dichtungssystem (13, 14) zwischen dem Pumpenteil (4, 5, 6), der von dem Motorteil angetrieben wird und mit dem äußeren Milieu in Verbindung steht, und dem mit dem Fluid gefüllten Motorteil aufweist, wobei ein dehnbarer Ausgleichs-Tank (6), der mit dem Motorteil in Verbindung steht, unterhalb des Motorteils an seinem der dynamischen Dichtung entgegengesetzten Ende jenseits des Endes der Motorwelle angeordnet ist und dem Druck des äußeren Milieus und der Kraft einer Kompressionsfedervorrichtung (79, 80) unterworfen ist, die sich einerseits gegen ein festes Teil (99), das mit dem Gehäuse des Motorteils verbunden ist und es an seinem unteren Teil verschließt, und andererseits gegen den dehnbaren Tank abstützt und einen Überdruck des Fluids im Inneren des Motorteils im Verhältnis zum äußeren Milieu bewirkt, dadurch gekennzeichnet, daß die Kompressionsfedervorrichtung eine erste Feder (79) und eine zweite Feder (80) aufweist, deren Kräfte sich addieren und die sich beide auf dem dehnbaren Tank abstützen, wobei die zweite Feder eine Auslösevorrichtung mit einem Rohr (84) aufweist, das auf einer Stange (83) angeordnet ist, die sich auf dem Tank abstützt, und wobei die zweite Feder (80) gegen eine Muffe (91) drückt, die an dem Rohr in Anschlag liegt, welches mit der Stange über eine Reihe von Kugeln (85) gekoppelt ist, die in einer Kehle (86) der Stange und in Einkerbungen des Rohrs von einer Buchse (87) gehalten werden, wobei die Komprimierung der zweiten Feder bis zu einem Stützanschlag (95) der Buchse zu einem Gleiten der Buchse auf dem Rohr und einer Freigabe der Kugeln aus der Kehle und zum Gleiten des Rohrs (84) auf der Stange (83) führt und so die zweite Feder (80) entspannt, wenn ihr Federweg einen vorbestimmten Wert erreicht.

2. Getauchtes Motor-Pumpenaggregat nach Anspruch 1, dadurch gekennzeichnet, daß die beiden Federn auf dem dehnbaren Tank über ein Teil (81) aufliegen, das auf dem Tank über die Zwischenlage eines Kugelanschlags (82) aufliegt, der das Teil sich frei drehen läßt.

0 090 411

# FIG.1

# FIG.3

# FIG.2

1

# FIG.4

FIG.5

FIG.6